# EUROPEAN PATENT APPLICATION

(11) **EP 3 479 972 A1**
(43) Date of publication of application: **08.05.2019**
(21) Application number: 17382746.0
(22) Date of filing: 07.11.2017
(51) Int. Cl.: B25J 9/16, G05B 19/418

(54) **ROBOT TASKS SCHEDULING PROCESS**

(71) Applicant: Atos Spain S.A., 28037 Madrid (ES)
(72) Inventor: JUAN FERRER, Ana María, Barcelona (ES)
(74) Representative: Cabinet Plasseraud

(57) **Abstract**

This invention relates to a robot tasks scheduling process, including an offload mode allowing for offloading (6) to edge computing infrastructure (1) at least part of robot (3) tasks of existing workload for which required quality of service is not available at level of robot (3) on board processor.

## Description

### FIELD OF THE INVENTION

The invention relates to the field of robot tasks scheduling processes.

### BACKGROUND OF THE INVENTION

A robot tasks scheduling process schedules the different tasks a robot has to perform. Either the scheduled task can be performed on board or it needs to be sent at a remote location to be performed there. Either the on board processor is very powerful and it can perform practically all required tasks but it is at the same time complex and expensive, or the on board processor is reasonable and it can perform only part of the tasks in practice and the rest of the tasks have to be performed at a remote location, requiring extra capacities at this remote location and requiring data transfer between the on board processor and the remote capacities.

Robots are constrained devices in terms of computation, storage and energy resources. Robots' designers and producers look for providing increasingly complex behaviors and skills at competitive costs. Robots increasingly require more and more sophisticated software systems so as to provide an ever broader spectrum of functionalities, and this challenges hard robot's on board processors' capacities. Increasing on board computation of robots raises their costs and energy demand while reducing their autonomy.

According to a prior art, it is known to provide for reasonable capacity on board processor robot, at the cost of simultaneously requiring additional network's capacities, like cloud capacities, so that tasks that cannot be performed on board of robot are deported at a remote location elsewhere in the network, for instance in a cloud containing additional capacities able to perform those robotic tasks.

Cloud robotics brings cloud technologies in terms of processing power, storage and services to extend robots capabilities. A cloud robot can be defined as any robot that relies on either data or code from a network to support its operation, what means where not all sensing, computation and memory is integrated into a single standalone system. Therefore, remote cloud resources are used for offloading heavy computation, accessing vast amounts of processing power and data in order to improve abilities, share knowledge and acquire skills. This way, cloud robotics is making robots which are lighter, cheaper and smarter.

However, cloud robotics, even if it is a powerful technology, still presents some drawbacks, especially relating to their relative inadequacy for tasks requiring real time processing, low latency and the requirement for continuous internet connectivity.

Because cloud robotics appears to be unable to warrant a sufficient quality of service, in case this quality of service is critical or even only important, many tasks will need to go back to on board processor level to be performed on board of the robot, thereby again increasing the complexity and the price of the robots, even if other tasks requiring no quality of service or needing only a limited quality of service may still be deported in the cloud.

### SUMMARY OF THE INVENTION

The object of the present invention is to alleviate at least partly the above mentioned drawbacks.

More particularly, the invention aims to provide for a good compromise allowing for, on the one hand deporting tasks requiring a notable or high quality of service, so as to keep reasonable complexity and price for the robot on board processor, and on the other hand deporting such tasks in a such a way as to still warrant required quality of service at a reasonable complexity and cost with respect to the remote location where these deported robot tasks are to be performed.

The invention proposes to deport part of the robot tasks requiring a substantial quality of service, so as to keep reasonable complexity and cost of the robot on board processor, but to deport them not far, so as to be able to warrant maintaining this required quality of service, and especially preferably maintaining a low latency, therefore to deport them to edge computing, when needed and when possible. The robot on board processor will also keep part of these robot tasks requiring a substantial quality of service.

So, these robot tasks requiring a substantial quality of service will be distributed at least between on the one hand robot on board processor and on the other hand edge computing, both able to warrant a substantial quality of service, and especially preferably a rather low latency.

The invention proposes to extend robot capabilities on demand without increasing robot on board complexity, and while keeping a satisfactory quality of service, preferably a low latency. Therefore the invention proposes to perform this extension of robot capabilities at edge computing level.

This object is achieved with a robot tasks scheduling process, including an offload mode allowing for offloading to edge computing infrastructure at least part of robot tasks of existing workload for which required quality of service is not available at level of robot on board processor. This offloading is offered via an offload mode which can be implemented within the robot, either as the only working mode of the robot or as a mode that can switched off so as to come back then to another existing mode like for example a traditional robot mode where all robot tasks are performed on board.

This edge computing robotics proposed by embodiments of the invention proposes an architecture that enables robots to offload complex perception, navigation, and cognition tasks to the edge computing infrastructures. This edge computing robotics will extend cloud computing robotics to the edge of the network.

Edge computing and cloud computing are both concerned with computing, networking and storage, and both share a number of mechanisms and attributes, but edge computing has the advantage to much better address the quality of service issues, in particular the latency issues, typically detected in large systems which are cloud computing limitations.

Edge computing benefits from reduction on volume of data traffic between the robot and the resource rich computing network environment, it reduces distance of transmitted data, shrinks latency, and overall improves quality of service. Moreover, edge computing generates new opportunities for enabling novel forms of environment knowledge gathering, data sharing among robots and cognitive services.

Therefore, edge computing robotics architecture will aim at enhancing the field of cloud computing robotics by using edge computing intrinsic capabilities to address existing cloud computing robotics limitations which are in particular real-time processing and latency.

Therefore, it is possible to develop a next generation of robots which simultaneously contain small and general purpose cheap on board processors and are software defined robots so as to achieve new skills, cognitive capabilities, and greater flexibility.

Preferred embodiments comprise one or more of the following features, which can be taken separately or together, either in partial combination or in full combination.

Preferably, an offload mode allowing for offloading to edge computing infrastructure at least part of robot tasks of existing workload for which required latency is not available at level of robot on board processor.

This way, latency is a critical parameter for robotics and is chosen as the main criterion for deciding on offloading or not robot tasks.

Preferably, said offload mode still schedules, at level of robot on board processor, the robot tasks of existing workload for which required quality of service, preferably required latency, is available at level of said robot on board processor.

This way, the closest environment to perform the robot tasks the better, if possible. This means that if there is no need or no real need to deport tasks at a remote location within the network, then of course the tasks can be kept at robot level, and will preferably be kept at robot level.

Preferably, a first decision is taken, at robot on board processor level, preferably by an intelligence layer built on top of robot operating system of robot, on which robot tasks of existing workload are scheduled at level of robot on board processor or at level of edge computing infrastructure.

This way, since the robot itself is taking the decision whether or not to offload some of its tasks, the decision will be very fast, what is important for latency reduction, and consistent with the existing load of this robot. However, there might be some management to do at edge computing level if the edge computing environment is shared by different robots.

Preferably, said first decision is taken depending on at least following criteria: an estimation of execution time of a given robot task at robot on board processor level, an estimation of execution time of said given robot task at edge computing level, an estimation of required data traffic volume for execution of said given robot task at edge computing level.

This way, the execution time and data traffic volume are the two key parameters to optimize task sharing between local robot and neighbor edge computing. Thereby, are taken into account not only their relative efficiency but also the over-cost due to data exchanges.

Preferably, said offloading from robot on board processor to edge computing infrastructure is performed via a communication through a dedicated local area network or through a dedicated wide local area network, preferably through MQTT (Message Queue Telemetry Transport) or TLS (Transport Layer Security), or advantageously through Bluetooth or Wifi.

This way, especially the local area network and, also but to a lesser extent, the wide local area network, are much faster than bigger networks like Internet, therefore improving notably latency reduction.

Preferably, said offload mode also allows for offloading to cloud computing infrastructure at least part of robot tasks of existing workload for which required quality of service, preferably required latency, is available neither at level of robot on board processor nor at level of edge computing infrastructure.

This way, edge computing capabilities can be extended on demand without need to increasing edge computing complexity.

Preferably, a decision is taken, at edge computing level, on which robot tasks of existing workload are scheduled at level of edge computing infrastructure or at level of cloud computing infrastructure, preferably depending on at least following criteria: an estimation of execution time of a given robot task at edge computing level, an estimation of execution time of said given robot task at cloud computing level, an estimation of required data traffic volume for execution of said given robot task at cloud computing level.

This way, the execution time and the data traffic volume are the two key parameters for optimizing task sharing between neighbor edge computing and rather far away cloud computing. Thereby, are taken into account not only their relative efficiency but also the over-cost due to additional data exchanges.

Preferably, said offloading from edge computing infrastructure to cloud computing infrastructure is performed via a communication through Internet.

This way, since it is relatively simple and easy to deport robot tasks to remote locations in the cloud, but since it is rather hard to reduce latency for communicating with these remote locations thereafter, this deporting operation is therefore preferably restricted to tasks requiring a big calculation volume but at the same time requiring no very critical timing.

Preferably, several edge computing infrastructures are interconnected with the same cloud computing infrastructure thereby sharing said same cloud computing infrastructure.

This way, a better compromise is performed between system complexity and system capability, since cloud computing is not needed all the time by each edge computing.

Preferably, several robots are interconnected with the same edge computing infrastructure thereby sharing said same edge computing infrastructure.

This way, a better compromise is performed between system complexity and system capability, since edge computing is not needed all the time by each robot.

Preferably, said same edge computing infrastructure performs one or more of following operations: knowledge gathering coming from different robots, data sharing between different robots.

This way, edge computing robotics not only extends robots resources but also manages robots cluster.

Preferably, said robot tasks offloaded to edge computing infrastructure include one or more of following robot tasks: perception robot tasks, navigation robot tasks, cognition robot tasks.

This way, edge computing robotics extends not only robot resources but also robot functionalities.

Preferably, said offloading from robot on board processor to edge computing infrastructure includes real-time processing robot tasks.

This way, offloading of critical real time robot tasks, which was earlier not available with interconnection to cloud computing, now becomes available because of faster and closer interconnection with edge computing.

Preferably, said edge computing infrastructure is: either a specific edge computing environment as Amazon Web Services Green Grass, or a general purpose cluster as Raspberry Pi.

These are examples of an environment which is able to support execution of containers in which different workloads can be deployed.

Preferably, said edge computing infrastructure offers both: robotics common services interacting with robot operating system, application services being of higher level than robotics commons services and interacting with a sensors network distinct from robot but deployed in the neighborhood of robot.

This way, edge computing interacts not only with neighbor robots but also with neighbor sensors included in the robots cluster.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows schematically an overview of an example of a system in which the robot tasks scheduling process according to an embodiment of the invention may be run.
Fig. 2 shows schematically an overview of an example of a robot tasks scheduling process running according to an embodiment of the invention.

### DETAILED DESCRIPTION OF THE INVENTION

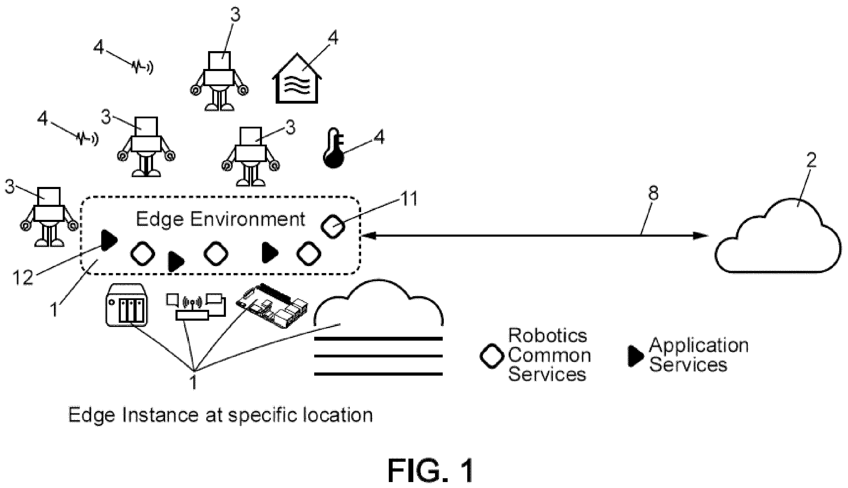

Fig. 1 shows schematically an overview of an example of a system in which the robot tasks scheduling process according to an embodiment of the invention may be run.

A robotic system comprises several robots 3 associated to several sensors 4. These several robots 3 associated to several sensors 4 are all attached to an edge computing environment 1 itself attached to a cloud computing environment 2. These several robots 3 associated to several sensors 4 all share the same edge computing environment 1. This cloud computing environment 2 is preferably a public cloud on Internet. This cloud computing environment 2 is preferably shared by several edge computing environments identical or similar to the edge computing environment 1 shown on figure 1. There is an Internet link 8 allowing communication between edge computing environment 1 and cloud computing environment 2.

The edge computing environment 1 corresponds to an edge instance at a specific location in the vicinity of the robots 3 and sensors 4 to which it is attached. The edge computing environment 1 includes robotics common services 11 and application services 12.

For instance, by way of example, in a specific application of a health care robot deployed in the home of an elderly person, there can be several robotics common services and several application services. Examples of robotics common services are: mapping services to scan the entire area of the elderly home and to define the point of interest which can be for instance a living room, a kitchen or a bathroom, or navigation and localization services to navigate into the scanned area. Examples of application services are: cognitive services like serious games or memory rehabilitation, social services (video with relatives, navigation through Internet, weather forecast...) or entertainment services (music, games, videos...).

The edge computing robotics environment 1 extends limited capacities of the robots 3 by taking advantage of latency optimized fault-tolerant resource richer computing environments made available by edge computing and by cloud computing.

A specific edge computing robotics environment 1 will preferably be associated to the deployment of several individual robots 3 and even with teams of several robots 3 in a certain specific location common to all considered robots 3, as well as to all associated sensors 4.

While basic robotics services are commonly executed from the robots' on board processors, the edge computing robotics environment 1 provides for enabling offloading all or part of the computation to it, or even part of the computation even further within the network to cloud computing robotics environment 2, depending on resource availability at each level, that means resource availability at the level of robots 3 themselves, at the level of the edge computing robotics environment 1, or at the level of the cloud computing robotics environment 2, these off-loading decisions taking into account specific real time requirements and constraints.

The edge computing robotics environment 1 may either be implemented as an edge computing robotics specific environment 1, such as Amazon Web Services Greengrass (registered trademark) enabled-devices, or be implemented through clusters of general purpose cheap devices, such as clusters of Raspberry Pi (registered trademark).

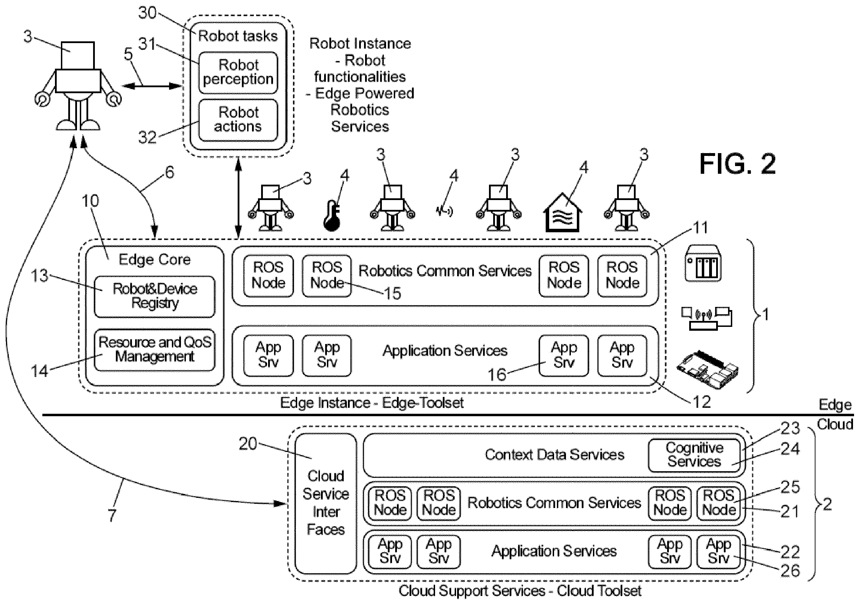

Fig. 2 shows schematically an overview of an example of a robot tasks scheduling process running according to an embodiment of the invention.

A robot 3, when having a robot task to perform, has three possibilities to perform it: he can perform it at a robot level 5, at edge computing robotics level 6, or at cloud computing robotics level 7, depending on the required latency and on the needed resources. Simple and immediate robot tasks will be performed at robot level 5. Intermediate complexity robot tasks still requiring a rather low latency will be performed at edge computing robotics level 6. Very complex tasks with practically no real time constraints will be performed at cloud computing robotics level 7.

At robot level 5, the robot tasks 30 which will be performed by the robot on board processor, are either robot perception tasks 31 or robot action tasks 32. The robot instance will contain the specific edge powered robotics services in relation to navigation, localization and mapping, and multi-robot coordination considering the novel available edge computing robotics environment 1. The ROS (Robot Operating System) packages are modified to be able to transmit necessary data to available edge computing robotics environment 1 and to offload robot tasks execution.

At edge computing robotics level 6, the edge computing robotics environment 1 comprises an edge core 10, a robotics common services module 11 and an application services module 12.

The edge core 10 includes a robot and device registry 13 and a resource and quality of service (QoS) manager 14. The edge core 10 provides for the edge computing execution environment, as well as, the necessary components for network management, enabling real time communication between edge computing robotics environment 1 and robots 3, as well as for robots' roaming among multiple access points. The resource and QoS manager 14 provides for QoS assurance mechanisms and tools dedicated to providing a latency optimized environment. In addition, it will enable scalability and orchestration of computing and storage resources with resource richer cloud computing robotics environment 2. The robot and device registry 13 enables to interface robots 3 and devices asset management at the edge computing robotics environment 1. The robot and device registry 13 keeps the tracks of edge associated services, sensors and robots, including their computing and storage resources, as well as, their interfaces and configurations so as to provide the ability to interact with them.

Two types of workloads are contemplated in the edge computing robotics environment 1: robotics common services and application services.

The robotics common services module 11 includes several robot operating system (ROS) nodes 15 implementing existing traditional ROS packages and specifically developed services dedicated to any specific application, like for example a health care robot. Robotics common services, enabled by a robotics common services module 11 exposed and deployed following the micro-services architectural pattern.

The application services module 12 includes several application services 16 providing higher level services developed specifically for the application scenario and which can interact with sensors 4 or with sensor networks 4 deployed in the same location as the robots 3. Here, preferably, several other robots 3 and other sensors 4 are also attached to this edge computing robotics environment 1. Application Services, that will depend on the specific usage scenario as means to orchestrate the rest of edge available services and which can include execution of data analytics, for example both in common data analytics frameworks such as Apache Spark (registered trademark) and lambda functions.

At cloud computing robotics level 7, the cloud computing robotics environment 2 comprises cloud service interfaces 20, a robotics common services module 21, an application services module 22, and a context data services module 23. The robotics common services module 21 includes several robot operating system nodes 25. The application services module 22 includes several application services 26. The context data services module 23 includes cognitive services 24. A set of cloud services interfaces 20 are implemented as a set of plug-ins and relying on existing cloud interoperability tools on top of IaaS (Infrastructure as a Service) and PaaS (Platform as a Service) cloud services. These cloud services interfaces 20 enable seamless integration of diverse cloud technologies. These cloud services interfaces 20 are used by the edge computing robotics environment 1, when cloud execution is required in order to execute both robotics common services and application services. Offloading robot tasks at cloud computing robotics level 7 can be decided by robot 3, as represented on figure 2. Edge computing robotics environment 1 can also decide to transfer some robot tasks from said edge computing robotics environment 1 to cloud computing robotics environment 2, as not represented on figure 2.

In order to overcome latency issues existing in cloud computing robotics, the edge computing robotics environment 1 provides tools and mechanisms for Quality of Service (QoS) assurance, while at the same time controlling overall edge computing robotics workload execution, and considering seamless orchestration with cloud computing robotics environment 2.

Although richer that robots 3, the edge computing robotics environment 1 is still limited in resources. Then, when not able to provide for the contemplated quality of service together with the necessary connectivity, the edge computing robotics environment 1 will consider the migration to resource richer cloud computing robotics environment 2 for certain resource voracious workloads, such as heavyweight analytics for reasoning on historical data, so as to be able to maintain at required level the overall edge computing robotics environment 1 quality of service.

The invention has been described with reference to preferred embodiments. However, many variations are possible within the scope of the invention.

## Claims

1. Robot tasks scheduling process, including an offload mode allowing for offloading (6) to edge computing infrastructure (1) at least part of robot (3) tasks of existing workload for which required quality of service is not available at level of robot (3) on board processor.

2. Robot tasks scheduling process according to claim 1, wherein an offload mode allowing for offloading (6) to edge computing infrastructure (1) at least part of robot (3) tasks of existing workload for which required latency is not available at level of robot (3) on board processor.

3. Robot tasks scheduling process according to any of preceding claims, wherein said offload mode still schedules (5), at level of robot (3) on board processor, the robot tasks of existing workload for which required quality of service, preferably required latency, is available at level of said robot (3) on board processor.

4. Robot tasks scheduling process according to any of preceding claims, wherein a first decision is taken, at robot (3) on board processor level, preferably by an intelligence layer built on top of robot operating system of robot (3), on which robot (3) tasks of existing workload are scheduled at level (5) of robot (3) on board processor or at level (6) of edge computing infrastructure (1).

5. Robot tasks scheduling process according to claim 4, wherein:
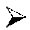 said first decision is taken depending on at least following criteria:
∘ an estimation of execution time of a given robot (3) task at robot (3) on board processor level (5),
∘ an estimation of execution time of said given robot (3) task at edge computing level (6),
∘ an estimation of required data traffic volume for execution of said given robot (3) task at edge computing level (6).

6. Robot tasks scheduling process according to any of preceding claims, wherein said offloading from robot (3) on board processor to edge computing infrastructure (1) is performed via a communication through a dedicated local area network or through a dedicated wide local area network, preferably through MQTT or TLS, or advantageously through Bluetooth or Wifi.

7. Robot tasks scheduling process according to any of preceding claims, wherein said offload mode also allows for offloading (7) to cloud computing infrastructure (2) at least part of robot (3) tasks of existing workload for which required quality of service, preferably required latency, is available neither at level (5) of robot on board processor nor at level (6) of edge computing infrastructure.

8. Robot tasks scheduling process according to claim 7, wherein:
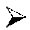 a decision is taken, at edge computing level (6), on which robot (3) tasks of existing workload are scheduled at level (6) of edge computing infrastructure (1) or at level (7) of cloud computing infrastructure (2), preferably depending on at least following criteria:
∘ an estimation of execution time of a given robot (3) task at edge computing level (6),
∘ an estimation of execution time of said given robot (3) task at cloud computing level (7),
∘ an estimation of required data traffic volume for execution of said given robot (3) task at cloud computing level (7).

9. Robot tasks scheduling process according to any of claims 7 to 8, wherein said offloading (7) from edge computing infrastructure (1) to cloud computing infrastructure (2) is performed via a communication (8) through Internet.

10. Robot tasks scheduling process according to any of claims 7 to 9, wherein several edge computing infrastructures (1) are interconnected with the same cloud computing infrastructure (2) thereby sharing said same cloud computing infrastructure (2).

11. Robot tasks scheduling process according to any of preceding claims, wherein several robots (3) are interconnected with the same edge computing infrastructure (1) thereby sharing said same edge computing infrastructure (1).

12. Robot tasks scheduling process according to claim 11, wherein:
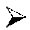 said same edge computing infrastructure (1) performs one or more of following operations:
∘ knowledge gathering coming from different robots (3),
∘ data sharing between different robots (3).

13. Robot tasks scheduling process according to any of preceding claims, wherein:
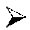 said robot (3) tasks offloaded to edge computing infrastructure (1) include one or more of following robot (3) tasks:
∘ perception robot (3) tasks,
∘ navigation robot (3) tasks,
∘ cognition robot (3) tasks.

14. Robot tasks scheduling process according to any of preceding claims, wherein said offloading (6) from robot (3) on board processor to edge computing infrastructure (1) includes real-time processing robot (3) tasks.

15. Robot tasks scheduling process according to any of preceding claims, wherein:
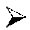 said edge computing infrastructure (1) is:
∘ either a specific edge computing environment as Amazon Web Services Green Grass,
∘ or a general purpose cluster as Raspberry Pi.

16. Robot tasks scheduling process according to any of preceding claims, wherein:
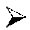 said edge computing infrastructure (1) offers both:
∘ robotics common services (11) interacting with robot operating system,
∘ application services (12) being of higher level than robotics commons services (11) and interacting with a sensors (4) network distinct from robot (3) but deployed in the neighborhood of robot (3).
